# EUROPEAN PATENT SPECIFICATION

(11) **EP 1 097 678 B1**
(45) Date of publication and mention of the grant of the patent: **11.07.2007**
(21) Application number: 00309712.8
(22) Date of filing: 02.11.2000
(51) Int. Cl.: A61C 13/00, A61C 9/00

(54) **Dental cast model base**
Basis für dentale Gipsmodelle
Base de support pour modèle dentaire

(30) Priority: 04.11.1999 GB 9926003
(43) Date of publication of application: 09.05.2001
(60) Divisional application: 06013717.1
(73) Proprietor: Neotek TDP Limited, Sheffield S10 2GB (GB)
(72) Inventor: Taylor, Andrew Michael, Coal Aston, Sheffield S18 2ER (GB)
(74) Representative: Wood, Graham

(56) References cited:
- DE-U- 9 107 093
- US-A- 2 786 272

## Description

The present invention relates to dental cast model bases or trays and models cast in such a base or tray, and in particular, but not exclusively, dental models which are used in the dental profession in the fabrication of dental restorations. Model base moulds for dental models allow the dental model contained within to be removed, sectioned and subsequently re-assembled within the mould portion of the model base. Document US 2786272 shows a similar device.

As the model bases allow for easy removal of individual sections of the model, lack of stability of the sections can occur which can seriously affect the accuracy of restorations, and which previously known model casts are unable to properly or satisfactorily address.

According to the present invention, there is provided a dental cast model base for the production of dental model casts, the model base having a mould adapted to produce a dental model cast and removable securing means to secure a dental model formed in the mould, to the model base, said securing means including at least one sleeve extending through the mould and a retaining member therefor, said securing means operable by having the securing means located spaced from the interior surfaces of the mould and the retaining member extends in use through the sleeve in the model, and characterised in that the one or more sleeves are square in section and the retaining member is of circular section, the diameter of the retaining member being substantially equal to the side of the square so as to provide voids between the sleeve and retaining member in use.

Preferably, the locating port or passage extends through the model in spaced relationship from the upper rim and base of the mould, preferably in a parallel spaced relationship. Preferably, in a full base system there are two lateral and one anterior port or passage formed in the model. In a quadrant base system only one lateral port or passage will be formed. Preferably, the port or passage is formed during moulding of the model such that the port or passage is formed through the area of model to be sectioned.

In one embodiment the port or passage may extend through a plurality of areas of model which are to be sectioned, and preferably, through all the areas of model.

Preferably, a retaining member of the securing means extends through the mould and at least a part extends into the port or passage which is set within the model formed in the mould. By set within is meant spaced from the outer surface thereof prior to sectioning.

Preferably, the port or passage is formed by a sleeve which is placed within the model.

Preferably, the securing means sleeve, with or without the retaining member in position, is held within the mould and extends in such a manner that it is spaced from the lower surface and upper rim of the mould so that the model formed therein sets around the said at least part of the securing means within the mould.

Preferably, the securing means comprises a retaining member which is selectively positioned with a sleeve in the model and with the mould to secure the model, and model sections, with the mould and hence dental model base. Preferably, the sleeve is wholly contained within the area of the model. Preferably, although not necessarily, the retaining member is straight and, preferably, removable from the elongate sleeve and the model after setting of the model material around the sleeve.

Alternatively, the retaining member may be curved. A curved retaining member is particularly advantageous for a quadrant base so that a single member may secure both the anterior and lateral sections.

Preferably, the retaining member extends through the sides of the mould and is removable from the mould to release the model formed.

Preferably, the retaining member is a pin which can be passed through an aperture in the sides of the mould and through the sleeve forming the port or passage within the model.

Advantageously, after the casting material is set in the mould, the retaining member, if provided, may be removed and the model, with the sleeve held therein, removed for conventional sectioning, typically so that each tooth or groups of teeth model is a separate section. Thereafter, the sectioned model may be located back within the mould with the sections in the correct positions and the retaining member inserted through the respective port or passage formed by the sleeve by sliding the same through the mould side walls and into the respective sleeve sections in each model section to thereby secure the sectioned model within the dental cast base. The model may be cut into one or more sections dependant upon the number of model teeth on which work is required.

It should be appreciated that the invention extends to a model of tooth or group of teeth having a locating port or passage formed therein spaced from the edges of the sectional model.

Preferably, the cross sectional area of the port or passage is sufficiently small so as not to compromise the strength of the model sections. Preferably, the sleeve is located to avoid contact with the lateral sides or base of the mould.

Preferably, the sleeves are formed from material which may be cut through during sectioning without compromising the integrity of the cast material..

Advantageously, by spacing the retaining member in this manner, swarf and dust generated by the sawing process may be displaced, on re-insertion of the retaining member, into the space between the retaining member and the interior surface of the sleeve. Furthermore, this type of design also provides secure but minimal point contact at the circumference of the retaining member which reduces friction within the sleeve when inserting and removing the retaining member.

A still further advantage of suspending or retaining the sleeves within the mould is that the external surfaces of the model base are substantially free of obstructions which allows universal fixing to articulators by conventional or novel methods. In addition, removal of the securing means does not require access to the underside of the model base. Furthermore, if the sectioned model is assembled incorrectly, the retaining member is not insertable, ensuring that the cause of the inaccuracy needs to be discovered and corrected before the model can be secured. A still further benefit of the invention is that the sleeve protects the model material from abrasion during repeated insertion and removal of the retaining member.

An additional advantage is that the retaining member can be inserted from anterior to posterior (A-P) or posterior to anterior (P-A). Preferably, the retaining member has a handle portion at one end thereof for assisting removal and insertion. As the handle portion can protrude, in use, from a side of the mould it is advantageous that it can be inserted A-P or P-A so that conflict with articulator components may be avoided irrespective of the type of articulator utilised.

Suitable material for the mould are plaster or artificial stone. A typical material for the model is α-hemihydrate of calcium sulphate. Preferably, the material has a hardness range which allows cutting thereof during sectioning of the model cast.

Typically, the invention is adapted as a base for a model of upper or lower teeth, preparations and edentulous areas but, preferably, is in the form of a quadrant base system or a full base system. Typically, the mould in the base is in the form of a channel preferably, having an anterior part of the channel and two lateral parts of the channel in a full base or only one lateral channel in a quadrant base. In a full base arrangement, it is preferred that three securing means are utilised each, preferably, formed by a retaining member and a sleeve for the retaining member.

In a preferred arrangement, three sleeves and respective retaining members are used with one sleeve extending along each of the lateral parts of the mould and a third sleeve extending across the laterally extending sleeves and along the anterior part of the mould. Each of the sleeves is then suspended in this arrangement, spaced from the base and upper rim of the mould, by the respective elongate, substantially straight retaining members which extend through the sleeves and pass through and are suspended by the walls of the mould at either end thereof.

In a quadrant base system only one lateral sleeve and retaining member is required as opposed to two.

Preferably, the retaining members are locked into position to securely lock the sections of the model in position after they have been relocated in the mould. This may be by means of a friction fit between the retaining member and the walls of the mould through which the retaining member extends.

Preferably, the mould, sleeves and retaining members form a model base system for the model produced therein.

Preferably, the anterior section of the model may be secured independently of the one or more lateral sections of the model. Preferably, both the anterior and lateral sections may be locked in position by the retaining member and the retaining member may be locked to the mould.

Preferably, the securing means are positioned in such a way that unrestricted access to the upper and lower surfaces of the model base is available which allows universal articulating methods.

Preferably, the positioning of the points of entry of the retaining members with respect to the mould are such as to avoid hindrance to the structure of an articulator.

Preferably, the model base hitherto described is in the form of a model base for an articulator.

The anterior and lateral retaining members of the invention may cross each other and it is preferred that the anterior and lateral retaining members are positioned with respect to the mould sides in such a way as to avoid cross-over aligned with an incisor tooth model. Preferably, cross-over is aligned with a canine and/or pre-molar model. Advantageously, this avoids the thinnest section incisor models from having too much erosion and reduces the risk of damage or failure thereof during use.

For the avoidance of doubt, the base is not exclusively for use with articulators and "freehand" uses are also envisaged.

An embodiment of the invention will now be described, by way of example, with reference to the accompanying drawings, in which:-
Figure 1 shows a perspective view of an example of a model base, with a mould and retaining means;

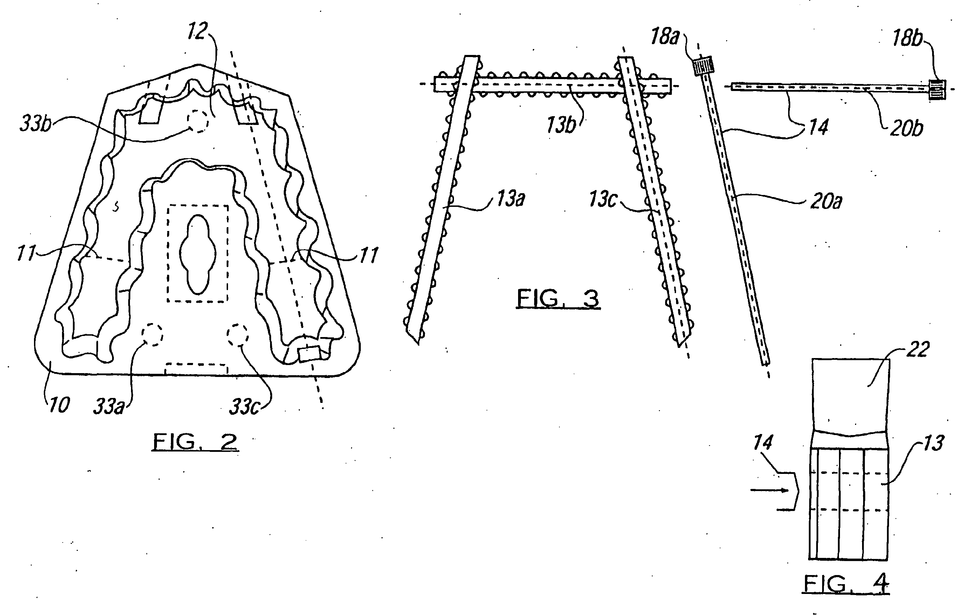

Figure 2 shows a model base according to the present invention with the retaining means removed;
Figure 3 shows the orientation of the sleeves together with the structure of two of the retaining means for location therein; and,
Figure 4 illustrates a section of a model in accordance with the invention.

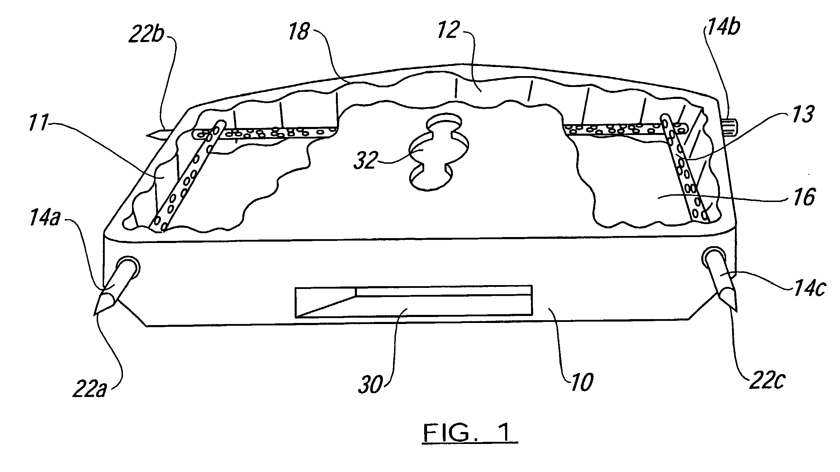

Referring to Figure 1, there is shown a dental model base of the type which is to be used in a similar manner to that of the present invention but which is not included in the scope of the appended claims. The dental model base 10 is suitable for insertion in an articulator (not shown) and has a mould 11 shaped in a "U" shaped manner so as to be capable of moulding an upper or lower impression of a patients dentition. A plurality of vertical grooves 12 are provided on the inner and outer vertical walls of the mould. Three elongate retaining members 14a, b and c extend horizontally through the mould section spaced upwardly from the bottom surface 16 of the mould 11 and spaced downwardly from the upper rim 18 of the mould. The members are orientated so that one member extends along each of the lateral parts of the mould from the anterior to the posterior thereof and a third member extends from side to side across the anterior section of the mould. The members are arranged so that the anterior member 14b is located immediately below the lateral members 14a, 14c. Each member has a handling end 18 and a shaft 20 extending from the handling end 18a, 18b and terminating in a point 22 to form the retaining member. Each member is utilised with a respective elongate sleeve 13a, 13b, 13c each of which is effectively suspended within the mould by the pin passing therethrough with the sleeve being contained within the mould. The retaining member passes along the port or passage formed by the sleeve.

The posterior face of the model base 10 includes a conventional elongate articulator slot 30 and the upper surface has a central section bounded on three sides by the mould and which includes a centrally located lobed circular aperture 32 for a dedicated articulator. The holes 33a, b and c are conventional in model base systems and are designed to be fitted to conventional articulator devices.

The present invention differs from the example of figure 1 in that a square section sleeve is provided around a retaining member of circular section, wherein the diameter of the retaining member is substantially equal to the side of the square.

In use, to form the mould, the sleeves 13a, b, c are suspended within the mould secured at either end to the mould side walls of the model base wherein the material which forms the model is introduced into the mould to cover the sleeves. When the same has solidified, the retaining members can be removed to allow removal of the model if required with the same members then utilised to retain the subsequently sectioned model in the mould by placing the same through the ports or passages within the model. The grooved vertical walls of the mould have sufficient taper to allow the model contained therein to be removed easily, and to provide positive location of the model sections after sectioning of the model. The small cross sectional area of the resulting section of sleeve will not compromise the strength of the model section. The sectioned dental models, one of which is shown in Figure 4, can then be relocated within the base and as each has a part of the sleeve held within the model medium, the sections are secured with the mould by passing the member through the ports or passages in each of the model sections and through the walls of the mould.

The securing means arrangement provides an efficient way of securing the model in position on the base. Furthermore an essentially internal locking system is provided, hence freeing the external surface of the model base for the purposes of fixing to an articulator using conventional and future novel methods. The siting of the insertion positions of the rods/pins ensures that the pins may be inserted and removed without impinging on the articulator.

## Claims

1. A dental cast model base (10) for the production of dental model casts, the model base having a mould (11) adapted to produce a dental model cast and removable securing means (14a, 14b, 14c; 13a, 13b, 13c) to secure a dental model, formed in the mould, to the model base, said securing means including at least one sleeve (13a, 13b, 13c) extending through the mould and a retaining member (14a, 14b, 14c) therefor, said securing means operable by having the securing means located spaced from the interior surfaces of the mould and the retaining member extends in use through a port or passage in the model formed by the sleeve, and **characterised in that** the one or more sleeves (13a, 13b, 13c) are square in section and the retaining member (14a, 14b, 14c) is of circular section, the diameter of the retaining member being substantially equal to the side of the square so as to provide voids between the sleeve and retaining member in use.

2. A dental cast model base according to claim 1, wherein the retaining member (14a, 14b, 14c) extends through at least the area of the model to be sectioned.

3. A dental cast model base according to claim 1 or 2, wherein the sleeve (13a, 13b, 13c) extends through the model in spaced relationship from the upper rim (18) and base (16) of the mould.

4. A dental cast model base according to claim 3, wherein the port or passage extends in parallel spaced relationship.

5. A dental cast model according to any preceding claim, wherein the port or passage is formed by the sleeve (13a, 13b, 13c) during the forming of the model.

6. A dental cast model base according to any preceding claim, wherein the securing means is held and extends within the mould (11) in such a manner that it is spaced from the lower surface (16) and upper rim (18) of the mould so that the model formed therein sets around the sleeve (13a, 13b, 13c) in the mould.

7. A dental cast model base according to claim 1, wherein the sleeve (13a, 13b, 13c) is contained within the area of the mould.

8. A dental cast model base according to claim 1, wherein the retaining member (14a, 14b, 14c) is substantially straight.

9. A dental cast model base according to claim 7 or 8, wherein the retaining member (14a, 14b, 14c) is selectively removable from the sleeve (13a, 13b, 13c) to free the model from the mould (11).

10. A dental cast model base according to any of claims 7 to 9, wherein the retaining member (14a, 14b, 14c) extends through the sides of the mould (11) and is removable from the model.

11. A dental cast model base according to any one of claims 7 to 10, wherein the sleeve (13a, 13b, 13c) is suspended within the mould by the retaining member.

12. A dental cast model base according to any preceding claim wherein the cross sectional area of the hole or passage is sufficiently small so as not to compromise the strength of the model sections.

13. A dental cast model base according to any preceding claim, wherein the mould (11) is adapted for a model to be formed from a partial, full or edentulous impression having an anterior part of the channel and one or two lateral parts of the channel.

14. A dental cast model base according to claim 13, wherein three sleeves (13a, 13b, 13c) and respective retaining members (14a, 14b, 14c) are used, with one sleeve extending along each of the lateral parts of the mould and the third sleeve extending across the laterally extending sleeves and along the anterior part of the channel.

15. A dental cast model base according to any of the preceding claims, wherein the retaining members (14a, 14b, 14c) are fixed by friction fit into position to fix sections of the model in position after they have been relocated in the mould (11).

16. A dental cast model base according to any of claims 13-15, wherein the anterior section of the cast model may be secured independently of the lateral sections of the model.

17. A dental cast model base according to any preceding claim, wherein the securing means is positioned in such a way that unrestricted access to the upper and lower surfaces of the model base (10) is available.

18. A dental cast model base according to any preceding claim, wherein the model base (10) is attachable to an articulator.

## Patentansprüche

1. Basis für ein Dentalabgussmodell (10) für die Herstellung von Abgüssen für Dentalmodelle, wobei die Modellbasis eine Form (11) zum Herstellen eines Abgusses für ein Dentalmodell und abnehmbare Befestigungsmittel (14a, 14b, 14c; 13a, 13b, 13c) zum Befestigen eines in der Form hergestellten Dentalmodells an der Modellbasis hat, wobei die genannten Befestigungsmittel wenigstens eine durch die Form verlaufende Hülse (13a, 13b, 13c) und ein Halteelement (14a, 14b, 14c) dafür aufweisen, wobei die genannten Befestigungsmittel **dadurch** betätigt werden können, dass die Befestigungsmittel jeweils von den Innenflächen der Form beabstandet angeordnet sind und das Halteelement im Gebrauch durch eine Öffnung oder einen Durchgang im Modell, die/der von der Hülse gebildet wird, verläuft, und **dadurch gekennzeichnet, dass** die wenigstens eine Hülse (13a, 13b, 13c) jeweils einen quadratischen Querschnitt hat und das Halteelement (14a, 14b, 14c) einen runden Querschnitt hat, wobei der Durchmesser des Halteelements im Wesentlich gleich der Seitenlänge des Quadrats ist, um im Gebrauch zwischen der Hülse und dem Halteelement Hohlräume zu bilden.

2. Basis für ein Dentalabgussmodell nach Anspruch 1, bei der das Halteelement (14a, 14b, 14c) durch wenigstens den zu segmentierenden Bereich des Modells verläuft.

3. Basis für ein Dentalabgussmodell nach Anspruch 1 oder 2, bei der die Hülse (13a, 13b, 13c) in vom oberen Rand (18) und der Basis (16) der Form beabstandeter Beziehung durch das Modell verläuft.

4. Basis für ein Dentalabgussmodell nach Anspruch 3, bei der der Durchgang oder die Öffnung in paralleler beabstandeter Beziehung verläuft.

5. Basis für ein Dentalabgussmodell nach einem der vorhergehenden Ansprüche, bei der die Öffnung oder der Durchgang während der Herstellung des Modells von der Hülse (13a, 13b, 13c) gebildet wird.

6. Basis für ein Dentalabgussmodell nach einem der vorhergehenden Ansprüche, bei der das Befestigungsmittel in der Form (11) so festgehalten wird und verläuft, dass es von der unteren Oberfläche (16) und dem oberen Rand (18) der Form beabstandet ist, so dass das darin hergestellte Modell um die Hülse (13a, 13b, 13c) in der Form herum härtet.

7. Basis für ein Dentalabgussmodell nach Anspruch 1, bei der die Hülse (13a, 13b, 13c) im Bereich der Form eingeschlossen ist.

8. Basis für ein Dentalabgussmodell nach Anspruch 1, bei der das Halteelement (14a, 14b, 14c) im Wesentlichen gerade ist.

9. Basis für ein Dentalabgussmodell nach Anspruch 7 oder 8, bei der das Halteelement (14a, 14b, 14c) zum Lösen des Modells aus der Form (11) selektiv aus der Hülse (13a, 13b, 13c) entfernt werden kann.

10. Basis für ein Dentalabgussmodell nach einem der Ansprüche 7 bis 9, bei der das Halteelement (14a, 14b, 14c) durch die Seiten der Form (11) verläuft und aus dem Modell entfernt werden kann.

11. Basis für ein Dentalabgussmodell nach einem der Ansprüche 7 bis 10, bei der die Hülse (13a, 13b, 13c) durch das Halteelement in der Form aufgehängt ist.

12. Basis für ein Dentalabgussmodell nach einem der vorhergehenden Ansprüche, bei der die Querschnittsfläche des Lochs oder Durchgangs klein genug ist, um die Festigkeit der Modellsegmente nicht zu beeinträchtigen.

13. Basis für ein Dentalabgussmodell nach einem der vorhergehenden Ansprüche, bei der die Form (11) zum Herstellen eines Modells aus einem teilweisen, vollständigen oder zahnlosen Abdruck mit einem anterioren Teil der Rinne und einem oder zwei seitlichen Teilen der Rinne ausgeführt ist.

14. Basis für ein Dentalabgussmodell nach Anspruch 13, bei der drei Hülsen (13a,13b, 13c) undjeweilige Halteelemente (14a, 14b, 14c) verwendet werden, wobei eine Hülse an jedem der seitlichen Teile der Form entlang verläuft und die dritte Hülse quer über die seitlich verlaufenden Hülsen und an dem anterioren Teil der Rinne entlang verläuft.

15. Basis für ein Dentalabgussmodell nach einem der vorhergehenden Ansprüche, bei der die Halteelemente (14a, 14b, 14c) formschlüssig in Solllage befestigt werden, um Segmente des Modells in Solllage zu befestigen, nachdem sie wieder in die Form (11) eingesetzt wurden.

16. Basis für ein Dentalabgussmodell nach einem der Ansprüche 13 bis 15, bei der das anteriore Segment des Gussmodells unabhängig von den seitlichen Segmenten des Modells befestigt werden kann.

17. Basis für ein Dentalabgussmodell nach einem der vorhergehenden Ansprüche, bei der das Befestigungsmittel so positioniert ist, dass ungehinderter Zugang zu den oberen und unteren Oberflächen der Modellbasis (10) verfügbar ist.

18. Basis für ein Dentalabgussmodell nach einem der vorhergehenden Ansprüche, wobei die Modellbasis (10) an einem Artikulator angebracht werden kann.

## Revendications

1. Base de support (10) pour modèle dentaire pour la confection de supports de modèles dentaires, la base de support de modèle ayant un moule (11) adapté pour produire un modèle dentaire, et des moyens de fixation amovibles (14a, 14b, 14c ; 13a, 13b, 13c) pour fixer un modèle dentaire, formé dans le moule, à la base de support, lesdits moyens de fixation comprenant au moins une garniture intérieure (13a, 13b, 13c) qui se prolonge dans la totalité du moule, et un élément de retenue (14a, 14b, 14c) pour cette garniture, lesdits moyens de fixation pouvant être utilisés lorsque placés à distance des surfaces intérieures du moule et, pendant l'emploi, l'élément de retenue se prolonge à travers un trou ou passage dans le modèle formé par la garniture, et **caractérisé en ce que** la garniture ou chaque garniture (13a, 13b, 13c) a une section carrée tandis que l'élément de retenue (14a, 14b, 14c) a une section circulaire, le diamètre de l'élément de retenue étant sensiblement égal au côté du carré de sorte à produire, pendant l'emploi, des vides entre la garniture et l'élément de retenue.

2. Base de support pour modèle dentaire selon la revendication 1, dans lequel l'élément de retenue (14a, 14b, 14c) se prolonge à travers au moins la zone du modèle à sectionner.

3. Base de support pour modèle dentaire selon la revendication 1 ou 2, dans lequel la garniture intérieure (13a, 13b, 13c) se prolonge dans la totalité du modèle en une relation espacée relativement au bord supérieur (18) et à la surface inférieure (16) du moule.

4. Base de support pour modèle dentaire selon la revendication 3, dans lequel le trou ou passage se prolonge en une relation parallèle espacée.

5. Base de support pour modèle dentaire selon l'une quelconque des revendications précédentes, dans lequel le trou ou passage est formé par la garniture intérieure (13a, 13b, 13c) pendant la formation du modèle.

6. Base de support pour modèle dentaire selon l'une quelconque des revendications précédentes, dans lequel les moyens de fixation sont maintenus et se prolongent à l'intérieur du moule (11) de façon à être espacés de la surface inférieure (16) et du bord supérieur (18) du moule, de sorte que le modèle formé à l'intérieur du moule durcit dans ce moule autour de la garniture (13a, 13b, 13c).

7. Base de support pour modèle dentaire selon la revendication 1, dans lequel la garniture intérieure (13a, 13b, 13c) est confinée à l'intérieur du moule.

8. Base de support pour modèle dentaire selon la revendication 1, dans lequel l'élément de retenue (14a, 14b, 14c) est sensiblement rectiligne.

9. Base de support pour modèle dentaire selon la revendication 7 ou 8, dans lequel l'élément de retenue (14a, 14b, 14c) peut être sélectivement dégagé de la garniture (13a, 13b, 13c) pour retirer le modèle du moule.

10. Base de support pour modèle dentaire selon l'une quelconque des revendications 7 à 9, dans lequel l'élément de retenue (14a, 14b, 14c) se prolonge à travers les côtés du moule (11) et peut être retiré du module.

11. Base de support pour modèle dentaire selon l'une quelconque des revendications 7 à 10, dans lequel la garniture (13a, 13b, 13c) est suspendue à l'intérieur du moule par l'élément de retenue.

12. Base de support pour modèle dentaire selon l'une quelconque des revendications précédentes, dans lequel la superficie de la section du trou ou passage est suffisamment petite pour ne pas compromettre la solidité des sections du modèle.

13. Base de support pour modèle dentaire selon l'une quelconque des revendications précédentes, dans lequel le moule (11) est adapté pour la confection d'un modèle à partir d'une empreinte partielle, complète ou édentée ayant une partie antérieure du canal et une ou deux parties latérales du canal.

14. Base de support pour modèle dentaire selon la revendication 13, dans lequel trois garnitures (13a, 13b, 13c) sont utilisées avec leurs éléments de retenue respectifs (14a, 14b, 14c), une garniture se prolongeant le long de chacune des parties latérales du moule et la troisième garniture se prolongeant en travers des garnitures qui s'étendent latéralement et le long de la partie antérieure du canal.

15. Base de support pour modèle dentaire selon l'une quelconque des revendications précédentes, dans laquelle les éléments de retenue (14a, 14b, 14c) sont fixés par ajustement serré de sorte à maintenir en place les sections du modèle après leur repositionnement dans le moule (11).

16. Base de support pour modèle dentaire selon l'une quelconque des revendications 13 à 15, dans lequel la section antérieure du modèle dentaire peut être fixée indépendamment des sections latérales du modèle.

17. Base de support pour modèle dentaire selon l'une quelconque des revendications précédentes, dans lequel les moyens de fixation sont placés de sorte à permettre d'atteindre sans difficulté les surfaces supérieure et inférieure de la base de support (10) pour modèle.

18. Base de support pour modèle dentaire selon l'une quelconque des revendications précédentes, dans lequel la base de support (10) pour modèle peut être fixée à un articulateur.
